(19)

Europäisches
Patentamt
European
Patent Office
Office européen
des brevets

(11)  **EP 2 476 901 A1**

(12)  **EUROPEAN PATENT APPLICATION**

(43) Date of publication:
**18.07.2012  Bulletin 2012/29**

(51) Int Cl.:
**F03D 7/04** (2006.01)

(21) Application number: **11151130.9**

(22) Date of filing: **17.01.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **SIEMENS AKTIENGESELLSCHAFT
80333 München (DE)**

(72) Inventor: **Frederiksen, Dan
6100 Haderslev (DK)**

(54)  **Method and monitoring apparatus for automated surveillance of a wind turbine and a method for creating a linear model**

(57)    The invention concerns a method for automated surveillance of at least one wind turbine (41), comprising the following process steps (21, 23, 18, 25 26, 27, 28, 29). One step is to create or retrieve at least one linear model (21, 23, 18) which represents at least one status parameter of the wind turbine (41) and which comprises a plurality of linear coefficients and at least one measurement variable, whereby the values of the linear coefficients are determined based on test measurement values (MVt) for the measurement variable and the status parameter of the wind turbine (41). Another step is to repeatedly capturing (25) momentary measurement values (30) for the measurement variables and the status parameter of the wind turbine (41). A further step is to determine (26) at least one momentary reference value of the status parameter based on the momentary measurement values for the measurement variables by using the linear model. Another step is to generate wind turbine status information (29) based on the deviation of the momentary measurement value from the corresponding momentary reference value of the status parameter. The invention also concerns a monitoring apparatus for such a surveillance and a method for creating a linear model for use in the method or the monitoring apparatus mentioned above.

FIG 2

EP 2 476 901 A1

**Description**

The invention relates to a method and a monitoring apparatus for automated surveillance, in particular fault detection, of a wind turbine and a method for creating a linear model for use in the method or the monitoring apparatus.

Today most automated surveillance of wind turbines and fault detection in particular is based on checking whether measurement values, which are indicating operational properties of the wind turbines, exceeding pre-defined constant limits. As soon as a measurement value exceeds its respective limit, an alarm is triggered. For example, if the temperature of the generator bearings of a wind turbine exceeds a certain temperature limit, an alarm is triggered and the wind turbine may be stopped. Yet if the wind turbine is operating in a very cold ambient atmosphere, the alarm may never be triggered because the respective temperature limit may not be exceeded, even if the bearings have run out of lubricant. The opposite may happen in a very hot climate. The alarm may then be triggered even if the bearings are performing perfectly well, but are just warm because of the hot ambient atmosphere. Thus constant limit alarms are often inaccurate, that is, they are often too imprecise to indicate whether something is malfunctioning or not. Alarms based on constant limits may produce many false alarms and over time, people may tend to ignore the alarm system, which in turn can lead to costly damages.

It is therefore an object of the present invention to provide a monitoring apparatus and methods for an improved automated surveillance of a wind turbine.

This object is achieved by a method according to claim 1 and by a monitoring apparatus according to claim 12.

The method according to the invention comprises several process steps. One step is to create at least one linear model or to retrieve at least one previously created linear model, which represents at least one status parameter of the wind turbine and which comprises a plurality of linear coefficients and at least one measurement variable. The status parameter represents a physical quantity, from which status information of the wind turbine can be derived. The values of the linear coefficients of this model are determined based on test measurement values for the measurement variable and the status parameter of the wind turbine. In another step, in an operational phase, momentary measurement values for the measurement variables and the status parameter of the wind turbine are repeatedly captured, e.g. at regular intervals. A further step is to determine at least one momentary reference value of the status parameter based on the momentary measurement values for the measurement variables by using the linear model. Based on the deviation of the momentary measurement value from the corresponding momentary reference value of the status parameter wind turbine status information is generated.

The linear models build by the method according to the invention are designed to indicate a status of the wind turbine or parts of the wind turbine. That is, the linear models are designed to indicate whether the wind turbine is fully functional or runs improperly. For this purpose each linear model comprises one mathematical function or a set of mathematical functions. Depending on the problem in practice it may be preferred to use a large set of mathematical functions. Basically the mathematical functions are composed of measurement variables, constants and mathematical operators, which act on the measurement variables and constants. The output values of the mathematical functions, i.e. of the linear model, are the reference values for the corresponding status parameters of the wind turbine. The measurement variables represent measurable properties of the wind turbine or parts of the wind turbine and/or relevant environmental conditions, e.g. temperatures, revolutions per minute or power gained by the wind turbine. They can represent directly measured values or also processed measurement values, e.g. by Laplace transforms or Fourier transforms. The measurement variables are the arguments of the mathematical functions. The values for the measurement variables and the output values of the mathematical functions can be practically anything, e.g. real or integer numbers, Boolean values or strings.

In detail, each mathematical function of the linear model consists either of one or of a sum of multiple mathematical terms. The mathematical term itself may consist of a linear coefficient or of a linear coefficient multiplied by a further mathematical function, referred to as sub-function. Thus the mathematical function of a linear model can be described as:

$$\text{RefVal} = \text{Func}(\text{MeasmntVar}_1, \ldots, \text{MeasmntVar}_i) = \qquad (1)$$
$$a_0 + a_1 \cdot \text{SubFunc}_1 + \ldots + a_n \cdot \text{SubFunc}_n$$

whereby 'RefVal' stands for the momentary reference value of a status parameter of the wind turbine, 'Func' stands for the mathematical function of the linear model, '$a_0$' to '$a_n$' stand for the linear coefficients, 'SubFunc$_1$' to 'SubFunc$_n$' stand for the sub-functions and 'MeasmntVar$_1$' to 'MeasmntVar$_i$' stand for the measurement variables, i.e. the arguments of the mathematical function. The linear models are linear in the coefficients and not necessarily in the mathematical functions as a whole. Therefore, the sub-functions do not have to be linear themselves. They can comprise linear and also nonlinear mathematical functions like the square function or trigonometric functions. Sub-functions contain at least one measurement variable. They can be described as:

$$SubFunc_j = f(MeasmntVar_1, \ldots, MeasmntVar_i) \qquad (2)$$

whereby 'SubFunc$_j$' stands for the j-th sub-function of a mathematical function of a linear model. Here, the indexed arguments 'MeasmntVar$_1$' to 'MeasmntVar$_i$' stand for the measurement variables of the j-th sub-function of the linear model.

Appropriate linear models for the surveillance of the wind turbine can be retrieved from previously created linear models or can be created new. As will be explained later, appropriate sub-functions, including proper measurement variables, are determined for the creation of the linear models based on the experienced or known physical correlation of the involved measurement values. For the estimation of the linear coefficients a deviation of captured test measurement values for the status parameter from the correlating reference value of the respective linear model is evaluated based on mathematical standard methods, e.g. 'curve fitting' methods.

Once the linear model is created or retrieved respectively, it can be applied to real life measurement values, i.e. it can be used in operation. Thereby, it is checked whether and, preferably, by which value a captured momentary measurement value of a status parameter differs from the corresponding momentary reference value determined by the respective linear model with the captured momentary measurement values of the measurement variables. Based on the result of this check a status information about the wind turbine may be generated. The status information can be an alarm, indicating that the wind turbine runs improperly. It can also indicate that the wind turbine runs properly so far. Thereby, the abstraction level of the status information can range from displaying measurement values of the wind turbine, which additionally can be marked as critical where necessary, to deduced complex verbal statements. For the latter it is conceivable to build a respective knowledge-based system which can provide 'intelligent' estimations concerning the actual status of the wind turbine, based on methods and techniques of artificial intelligence (AI), e.g. based on 'fuzzy logic'.

The invention turns away from automated fault detection based on constant limits. It rather pursues the principle of connecting a large amount of measurement values of a wind turbine under the universal predictive concept of linear models in order to particularly identify defect components. Thereby it is based on varying limits, which depend on the output values of the linear models. Thus the invention allows for much tighter and more precise limits for the fault detection. This can lead to fewer false alarms and more correct alarms, which already has been proved during hundreds of experiments with real life data.

As explained above, for the surveillance method according to the invention, an appropriate method for creating a linear model may preferably comprise a modelling phase, in which the linear model is built such that it represents at least one status parameter of the wind turbine and comprises a plurality of linear coefficients and at least one measurement variable. The method of creating the model further comprises a model adjustment phase, in which a plurality of test measurement values for the measurement variables and the status parameter of the wind turbine are captured or retrieved, e.g. from previously collected test measurement values, and the values of the linear coefficients are determined using the test measurement values.

During the modelling phase the structure of the linear model is designed. That comprises the definition of the status parameter it shall represent, the number and the correlation of its linear coefficients and the definition of the sub-functions including the measurement variables. This can be done for example by educated guesses from experts like engineers or scientists or operators of the wind turbine. Usually the structure of a linear model can be found with only a quantitative understanding of the problem at hand.

Then during the model adjustment phase the value of each linear coefficient of each linear model is estimated. The linear coefficients can be estimated by evaluating the deviation of the calculated linear model output, i.e. the reference value from correlating measurement values for the status parameter. For this purpose several sampling steps can be executed. During each sampling step a sample, i.e. the values for the measurement variables and the correlating status parameter is captured. The samples are captured from sensors, which are suitably placed for measuring respective physical quantities of the wind turbine and/or respective environmental conditions. Since the linear models should represent the behaviour of a well functioning wind turbine, preferably the samples are captured from wind turbines, which are running properly. It is principally conceivable to do one or only few sampling steps. Preferably, a large number of sampling steps are done, in order reduce measurement errors. More preferably, much more samples than the number of linear coefficients, which shall be estimated, may be gathered.

The estimation of appropriate linear coefficients equates to the problem of solving a system of linear equations with one equation for each sample. Thereby, each linear equation represents a difference or a function of the difference (e.g. the difference in the square), hence referred to as model residual, between the respective mathematical function of the linear model and the corresponding measured status parameter. Thus an example for an equation representing said difference can be described as:

$$\mathrm{ModRes = Func(MeasmntVar_1,..., MeasmentVar_i)} \quad (3)$$
$$- \mathrm{StatParam,}$$

whereby 'ModRes' stands for the model residual.

'Func(MeasmntVar$_1$,....,MeasmntVar$_i$)' stands for the mathematical function of the linear model calculated with the measurement values for the measurement variables ('MeasmntVar'). Depending on the linear model the measurement values could have been from the actual and also from a former sample. 'Stat-Param' stands for the actually captured correlating status parameter of the wind turbine.

The unknowns of the linear equations to be solved are the linear coefficients of the mathematical function as depicted in the mathematical term (2). As mentioned above, preferably the number of samples and therefore the number of linear equations exceeds the number of the linear coefficients. Although a perfect match of the reference value, i.e. the calculated output value of the respective mathematical function, with the measurement value of the correlating status parameter can be aimed, it is in the nature of things, that this often can not be achieved. Therefore linear coefficients can be estimated in such a way that the output of the linear model fits the measurement values of the status parameters but to a certain degree. Diverse methods that can be deployed for estimating fitting linear coefficients are discussed below.

Generally each phase or step of the method can be proceeded more than once and the phases can also be proceeded in different order. For it can be reasonable to interrupt the operational phase, repeat the modelling phase and/or the model adjustment phase and return to the operational phase again. For example in case of a change of operational conditions for the wind turbine it may be necessary to adapt linear models to the new conditions. It is also conceivable that the modelling and the model adjustment phase are repeated several times in order to optimize a linear model. It is further conceivable, that several methods according to the invention can be combined to get one comprehensive method for monitoring a hole wind turbine farm. After the model adjustment phase for example statistical tests may show that some of the mathematical terms of the linear model can advantageously eliminated, thus resulting in a simpler model. This can be part of an ongoing evolution of the linear model, before it is finally put to work.

The monitoring apparatus according to the invention comprises a model interface for creating or retrieving at least one linear model which represents at least one status parameter of the wind turbine and which comprises a plurality of linear coefficients and at least one measurement variable, whereby the value of each linear coefficient is determined based on test measurement values for the measurement variable and the status parameter of the wind turbine. It further comprises a capturing system for repeatedly capturing momentary measurement values for the measurement variables and the status parameter of the wind turbine, e.g. at regular intervals. The monitoring apparatus also comprises an analysing system, for determining at least one momentary reference value of the status parameter based on the momentary measurement values for the measurement variables using the linear model, and for generating wind turbine status information based on the deviation of the momentary measurement value from the corresponding momentary reference values of the status parameter. It comprises at least one output interface which outputs the wind turbine status information.

The capturing system, the analysing system and the output interface are connected via data links. Thereby the data links can be implemented by any means capable for transmitting and receiving digital information or analogue signals, including wireless and wired connections as well.

The capturing system preferably may consist of sensors and an accumulation system which are connected to each other. The capturing system is suitable for capturing a number of measurement values related to the wind turbine. The sensors to be applied are sensors appropriate for measuring relevant physical quantities of the wind turbine and/or relevant environmental conditions. They are placed accordingly at the wind turbine, e.g. in the nacelle of the wind turbine, and/or in the environment of the wind turbine. The accumulation system processes data delivered by the sensors and converts them into measurement values appropriate for further processing by the analysing system. Thereby the accumulation system can be designed as one ore more separate systems and/or can be integrated in the sensors. It is conceivable that the accumulation system comprises a data storage system for buffering sensor data before and/or after conversion into measurement values. The data storage system can for example be used for the down-sampling described above. For the down-sampling the accumulation system can further comprise a respective processing logic.

It is also conceivable that the data storage system and/or the down-sampling logic can be implemented as part of the analysing system. Then the data storage system may also be used for storing linear model data. The analysing system can be developed as a single system or also as several systems, for example separated according to their functionality and/or spatial distribution. The systems can be interconnected respectively. The analysing system or parts of it can be implemented by computer systems or also by application-specific integrated circuits (ASIC) or programmable gate arrays (FPGA). Preferably the analysing system comprises one ore more data buffering systems, to store deviation limits and other data necessary for the monitoring processes.

The model interface may be any storage or any interface to get the linear model or a program for generating the linear model. It preferably may be integrated in the analysing system or at least connected to it.

The output interface can be implemented as one ore more systems by which users can interact with the monitoring apparatus. The output interface can include hardware and software components as well. It provides means of input and/or output, allowing the users to manipulate the monitoring apparatus, for example to modify or substitute linear models. It also allows the monitoring apparatus to indicate a status of one or more wind turbines respectively. It further may generate and/or transmit automatic repair programs to respective parts of the wind turbine or central systems. Preferably at least one output interface can be developed as a graphical user interface (GUI), in particular if the displayed status information comprises plots of measurement value progressions. The GUI can accept input via devices such as computer keyboard and mouse and provides articulated graphical output on the computer monitor. The output interface can additionally provide acoustic out- and/or input means, e.g. a loudspeaker for generation of an acoustic alarm signal.

Particularly advantageous embodiments and features of the invention are given by the dependent claims, as revealed in the following description. Further embodiments may be derived by combining the features of the various embodiments described below, and features of the various claim categories can be combined in any appropriate manner.

In a preferred embodiment of the method for monitoring a wind turbine according to the invention at least a momentary deviation limit is determined based on the momentary reference value and the status information is generated based on whether the momentary measurement value for the status parameter exceeds the momentary deviation limit.

The deviation limit can be defined as a mathematical function of the respective momentary reference value. In many cases it is sufficient that the deviation limit results from an addition and/or subtraction of a constant value, hence referred to as deviation limit constant, to the momentary reference value:

$$\mathtt{DeviationLimit\ =\ RefVal\ \pm\ const.} \qquad (4)$$

In the example 'DeviationLimit' stands for the deviation limit, 'RefVal' stands for the momentary reference value as described in mathematical term (1) and 'const' stands for a deviation limit constant. This results in deviation limits, whose values run parallel to the output values of the linear model. The deviation limit can also be defined as a more complex mathematical function, which behaves variably in dependency on the linear model output values. It depends on the situation whether to define variable or constant deviation limits regarding the output values of the linear model. It can also be advantageous to define multiple deviation limits per linear model, thus defining for example a deviation limit area. Deviation limit areas can be defined for example by addition and subtraction of constant or variable values to the momentary reference values. That is, the deviation limit resulting from the addition, referred to as high deviation limit, defines the high boundary, the deviation limit resulting from the subtraction, referred to as low deviation limit, defines the low boundary of the deviation limit area.

When the deviation limits are determined, it may easily be proved whether the momentary measurement value for the status parameter is exceeding the respective deviation limit and based on that, and status information about the wind turbine may be generated.

In a preferred embodiment at least one applied linear model is a linear normal model, i.e. a linear model that causes normally distributed model residuals. Linear normal models are generated analogous to linear models as described above. A linear model may become a linear normal model by repeating the modelling and model adjustment phases accordingly, i.e. until it fulfils the said requirements.

Normally distributed model residuals are an indicator that only noise terms are left in the linear model or, more precisely, in the model residuals. The appliance of linear normal models can improve reliability and accuracy of the surveillance and the fault detection of the wind turbine.

In a particular preferred embodiment of the method according to the invention at least one applied linear model is a dynamic linear model. Dynamic linear models additionally depend on previous or older measurement values of the wind turbine. Thus, they comprise several instances of the same measurement variable only at different points in time. According to equation (1) a dynamic linear model can be described as:

$$\mathtt{RefVal\ =}$$
$$\mathtt{Func(MeasmntVar_1(t-\Delta t_{11}),\ldots,MeasmntVar_1(t-\Delta t_{1i(1)});\ldots;}$$
$$\mathtt{MeasmntVar_n(t-\Delta t_{n1}),\ldots,MeasmntVar_n(t-\Delta t_{ni(m)})),} \qquad (5)$$

whereby MeasmntVar$_j$ (t-$\Delta$t$_{jk}$) stands for the measurement variable number j at time t-$\Delta$t$_{jk}$ and the number of necessary instances for this measurement variable is i(x). Therefore, captured measurement values which are required for calculations at a later point in time are buffered accordingly.

Dynamic linear models additionally regard the element of time, thus enhancing the power of linear models. For example by means of dynamic linear models also state space models and dynamic relationships can be implemented. Thus, the usage of dynamic linear models can improve the surveillance and the fault detection of wind turbines.

In a further advantageous embodiment of the method according to the invention at least one applied linear model is supplemented with one or more filter steps for filtering problematic measurement values, thus preventing the respective linear model from using problematic measurement values. Problematic measurement values are measurement values, when taken into account, may falsify the output of the linear model significantly. The filter steps are applied on the captured measurement values before the output of the respective linear model is calculated.

During the filter steps preferably conditional constructs and mathematical terms with mathematical and/or logical operations are applied. Thereby different operations can be performed, depending on whether a Boolean condition specified in the respective conditional construct, evaluates to true or false. For example, if it is known, that a linear model causes useless results if values are put into a certain measurement variable of the linear model, which are greater than a certain limit, an appropriate filter step can be formulated as follows: "if a captured value for the measurement variable is greater than a certain limit, then ignore that measurement value else calculate the reference value for the status parameter using this measurement value. Filters may be used during the operational phase and also during the model adjustment phase.

In a particular advantageous embodiment of the method according to the invention all captured measurement values within a defined period are down-sampled. To down-sample means to collect a group of captured measurement values and combine them to one representative measurement value. Thereby, the number of measurement values which have to be considered for the monitoring are reduced. This helps to cope with large amounts of measurement values captured within a short space of time, which might be difficult to handle. The representative measurement value can be gained by building the arithmetic mean or by any other appropriate mathematical method.

Down-sampling can be done in an additional step before the output of the respective linear model is calculated, i.e. during the operational phase after the first and prior to the second step. It can also be used to reduce the test data flow to a manageable amount during the model adjustment phase.

In an advantageous embodiment of the method according to the invention linear coefficients are determined by means of the 'least squares' method. The least squares method is one of the curve fitting methods, mentioned above, which can be used for determination of the linear coefficients of a linear model. It finds its optimum when the sum of the squared model residuals (residual$_i$), which are defined according to mathematical term (3), is a minimum:

$$\mathrm{Minimum}\left(\sum_{i=1}^{N} \mathrm{residual}_i^2\right), \qquad (6)$$

For that purpose several sampling steps are performed as describe above and a respective equation system with one equation for each sample is solved or a minimal solution is found respectively. Thereby, each equation represents a squared model residual, calculated with the sample in question. As already mentioned it is advantageous if the number of linear equations exceeds the number the linear coefficients, thus resulting in an over-determined linear equation system.

An advantage of the least squares method is that it involves simple algebraic calculations and requires only a straightforward mathematical derivation.

In a further advantageous embodiment of the method according to the invention linear coefficients are determined by "robust fit" methods. For the linear model not to be unduly affected by small departures from linear model assumptions and outliers, such as poor measurement values, there are methods known as robust fit or robust estimation, that can be used to estimate the linear coefficients, e.g. the "random sample consensus" method (RANSAC). Generally robust fit methods distinguish themselves from other methods in being largely resistant to outliers. Thereby it depends on the robust fit method being employed which degree of outlier tolerance can be achieved. Such a fit method is particularly advantageous in the field of wind turbines, where a large number of wrong measurements may be expected.

In a further preferred embodiment of the method according to the invention deviation limits can be derived from the model residuals. Thus, once the coefficients are determined, model residuals of the respective linear model are collected. This can preferably be done during the sampling steps of the model adjustment phase, when model residuals are determined anyway. But it is also conceivable, that model residuals are determined and collected separately during several sampling steps at a later point of time. The collected model residuals can give an impression of what deviations of real life data have to be expected from the output of the respective linear model during the operational phase. It thereby applies that, the more model residuals are collected the more meaningful information about the deviation of the linear model can be gained thereof.

It is preferable that information about the deviation of the reference values determined by the linear model from the measurement values of the status parameter are for estimating appropriate deviation limits for the linear model. As already mentioned, deviation limits are important to identify whether measurement values for the status parameter are recognized as problematic or not and whether an alarm may be triggered or not. Especially deviation limits which are defined according to a central tendency of the model residuals, i.e. the way in which the model residuals tend to cluster around some value, can be useful. There are known methods for determination of tendency values, for example the determination of the 'arithmetic mean', the 'median', i.e. the numeric value separating the higher half of the collected model residuals from the lower half, and the 'mode', i.e. the value that occurs most often in the model residuals collection. Once the model residuals are collected, a tendency value can be determined for the collected model residuals. The tendency value then can be used for defining the deviation limits, for example as deviation limit constant.

For defining the deviation limits, preferably, measures can be considered which describe how spread out the model residuals. Therefore, in a further advantageous embodiment of the method according to the invention deviation limits can be derived from a 'standard deviation' of the model residuals. For that purpose, standard deviations of the collected model residuals are calculated. The calculated standard deviation shows how much variation or 'dispersion' there is from the arithmetic mean of the collected model residuals. A low standard deviation indicates that the model residuals tend to be very close to their arithmetic mean, whereas a high standard deviation indicates that the model residuals are spread out over a large range of values. As a consequence it can be advantageous to use deviation limits with deviation limit constants and to define the deviation limit constants as a function of the standard deviation, e.g. as sum of the standard deviation and the arithmetic mean of the collected model residuals. Thus with the dispersion of the model residuals an additional significant property of the linear model can be taken into account for identifying problematic reference measurement values. It generally depends on its respective value and the situation how the standard deviation can be used for defining the deviation limits.

Other objects and features of the present invention will become apparent from the following detailed descriptions considered in conjunction with the accompanying drawings. It is to be understood, however, that the drawings are designed solely for the purposes of illustration and not as a definition of the limits of the invention.

Fig. 1 shows in a curve diagram the principal of operation of a fault detection system according to the state of art;

Fig. 2 shows a flow chart of an embodiment of the method according to the invention;

Fig. 3 shows in a curve diagram the principal of fitting linear coefficients according to the method described in figure 2;

Fig. 4 shows in a curve diagram the principal of operation of the method according to the invention depicted in figure 2;

Fig. 5 shows a schematic perspective of a wind turbine and a monitoring apparatus according to an embodiment of the invention.

In the drawings, like reference numbers refer to like objects throughout. Objects in the diagrams are not necessarily drawn to scale.

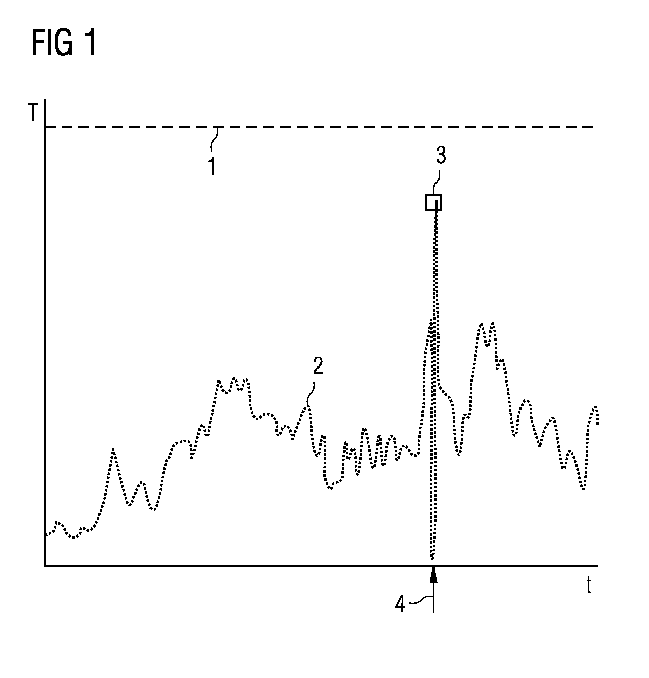

Figure 1 shows in a curve diagram the principal of operation of a fault detection system for a wind turbine according to the state of art. The curve diagram comprises one curve displaying values of a reference measurement 2 that represents a physical quantity relevant for the status of a wind turbine, e.g. the temperature T of a generator bearing, over time t. According to the state of the art of fault detection a constant alarm limit 1 is defined for the generator bearing temperature 2. In figure 1 the constant alarm limit 1 is depicted as dotted line. In the situation showed in figure 1 no alarm is triggered, because the generator bearing temperature 2 does not exceed the alarm limit 1. Even around the time of lubrication 4 when the generator bearing temperature 2 reaches a very high value peak 3, thus indicating an obvious problem, no alarm is triggered. Maybe because of an increasing pressure within the generator bearing the lubrication increases the generator bearing temperature 2, which it should not, but not anywhere near the alarm limit 1. For that reason generator bearing problems can not be identified and therefore not be solved by this approach.

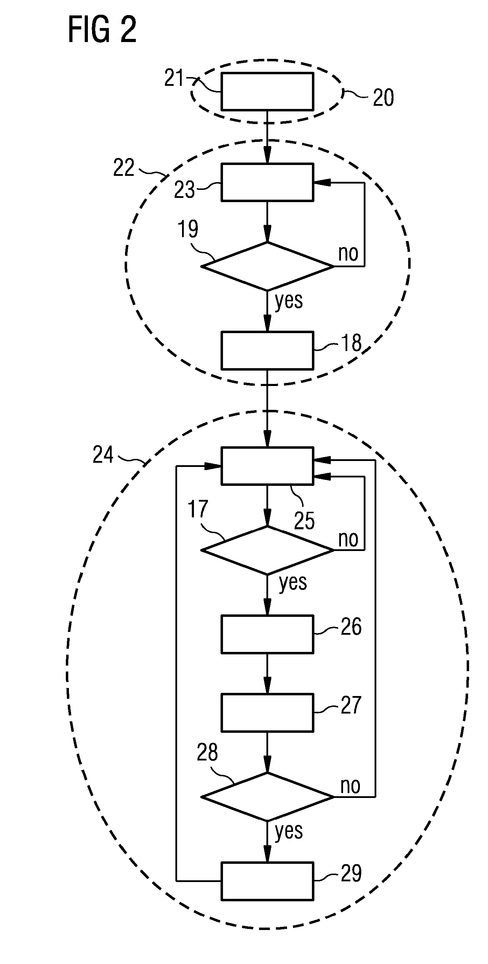

Figure 2 shows a flow chart of an exemplary embodiment of the method according to the invention. The rectangles 21, 23, 18, 25, 26, 27, 29 represent procedural steps, the rhombuses 19, 17, 28 represent points of decision, the arrows depict the process flow and the doted circles 20, 22, 24 mark the three phases of the method according to the invention. In the following this method is illustrated by an example which for clearness has been simplified. The problem to be solved is to trigger an alarm when the generator bearings of the wind turbine start to malfunction. In particular an alarm shall be triggered when the generator bearings are running hot because of a defect and not because of hot ambient temperature.

During the modelling phase 20 in a first step, the guessing step 21, an educated guess about a linear model suitable for the problem is made. Here it is preferably expected that under normal circumstances the generator bearing temperature dependents on the last 20 minutes history of the ambient temperature, of the power produced by the wind turbine and of the squared actual number of generator revolutions per minute (rpm). This leads to the following dynamic linear model, which for simplicity comprises only a single equation:

$$
\begin{aligned}
\texttt{GenBeTm} &= \\
&a_0 + a_1 \cdot \texttt{AmbieTmp} + a_2 \cdot \texttt{AmbieTmp(1)} + a_3 \cdot \texttt{AmbieTmp(2)} + \\
&a_4 \cdot \texttt{ActPower} + a_5 \cdot \texttt{ActPower(1)} + a_6 \cdot \texttt{ActPower(2)} + \\
&a_7 \cdot \texttt{GenRpm}^2 + a_8 \cdot \texttt{GenRpm(1)}^2 + a_9 \cdot \texttt{GenRpm(2)}^2
\end{aligned}
\tag{7}
$$

In the linear equation above, 'GenBeTm' stands for the reference value of a status parameter of the wind turbine, i.e. the output variable of the dynamic linear model, which, in this example, represents the generator bearing temperature. Therefore, 'GenBeTm' corresponds to the momentary reference value 'RefVal' in equation (1). 'AmbieTmp' are the measurement variables for actual or past ambient temperature values respectively. 'ActPower' are the measurement variables for actual or past produced power values respectively. 'GenRpm' are the measurement variable for actual or past values of generator revolutions per minute (rpm) respectively. Therefore, 'AmbieTmp()', 'ActPower()' and 'GenRpm()$^2$' correspond the sub-functions 'SubFunc$_i$' of the linear model depicted in mathematical term (1). The value in brackets next to some of the measurement variables signifies the ordinal number of the respective measurement value according to its chronological order within the past samples. The absence of a value in brackets signifies that the most recent measurement value shall be put into the respective measurement value. For example the measurement variable ActPower shall be provided with the most recently measured produced power, ActPower(1) with the last measured produced power and ActPower(2) with the second last measured produced power.

The linear coefficients 'a$_0$' to 'a$_7$' are determined in the subsequent steps 23, 18 during the model adjustment phase 22. Thereby in a first step 23, the sampling step, a sample, i.e. measurement values of the actual ambient temperature, the produced power, the rpm and the generator bearing temperature of a well functioning wind turbine are captured and buffered for later use. The measurement values are captured from suitably placed, appropriate sensors. As mentioned above, to be resilient to measurement errors a large, predefined number of said sampling steps 23, appropriate for a proper estimation of the linear coefficients, are executed. Therefore, at the end of each sampling step 23 it is proved 19 whether or not the defined number of sampling steps 23 have been executed by then. If not, another sampling step 23 is executed and a new sample is captured.

Otherwise the method proceeds with the next step, the fitting step 18. For the sampling steps 23 an adequate sampling rate, i.e. a time interval between the sampling steps 23 is defined. Without loss of generality, it is defined that every 10 minutes a sampling step 23 is executed.

In the fitting step 18 the measurement values of the large amount of buffered samples are put into the linear equation one by one, thus generating a - hence over-determined - linear equation system. Thereby, an appropriate fit for the linear coefficients is estimated by deploying the 'least squares' method on the model residuals, i.e. the differences between the calculated results of the equations and the correlating values of the generator bearing temperature.

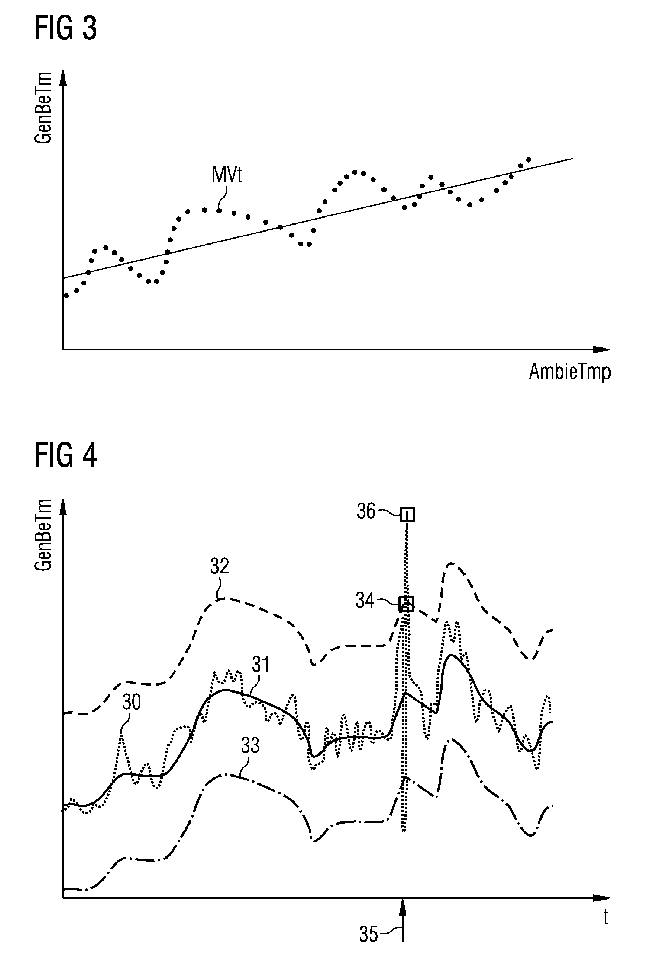

Figure 3 shows in a curve diagram the principal of fitting linear coefficients for the linear model according to the model adjustment phase 22 described in figure 2. The diagram shows a number of test measurement values MVt of the generator bearing temperature GenBeTm plotted against the ambient temperature AmbieTmp. The solid-line curve displays the dynamic linear model (corresponding to the reference values given by this model) as defined in equation (7), with linear coefficients determined by means of the 'least squares' method on the model residuals. The solid-line curve closely follows the generator bearing temperature test measurement values MVt and is therefore adequate for representing this status parameter of the wind turbine. In the example of Figure 3 the fit is shown for only one dimension, where the output quantity, the generator bearing temperature, only depends on one measurement variable, here the ambient temperature AmbieTmp. But the principle of the method of invention works accordingly with a plurality of measurement variables. In that case the reference values of the linear model can be represented by a hyperplane in a multi-dimensional vector-space spanned by the measurement variables instead of a two dimensional curve. The methods mentioned above for determination of the linear coefficients can also be applied to hyper-planes, in particular the 'least squares' method.

At the end of the model adjustment phase 22 the linear coefficients are determined, and the dynamic linear model is completed and ready for usage with real life data, i.e. ready for the operational phase 24. Data of the determined dynamic linear model, e.g. the linear coefficients are stored accordingly.

Returning to Figure 2, during the operational phase in a first step, the second sampling step 25, samples, i.e. measurement values for the generator bearing temperature, the ambient temperature, the produced power and the rpm are captured and buffered for later use. Since the dynamic linear model makes use of past measurement values, at the end of the second sampling step 25 it is proved 17 whether or not the values for all measurement variables have been captured by then. If not, a second sampling step 25 is executed, otherwise the method proceeds with the second step, the calculation step 26.

In the calculation step 26 the captured measurement values are put into the respective measurement variables and the output value of the linear model, i.e. the reference value for the generator bearing temperature is calculated by use of the equation depicted in mathematical term (7) with determined coefficients.

In a third step, the limit determination step 27 a deviation limit area is determined, which comprises a high and a low deviation limit. The high deviation limit results from an addition, the low deviation limit from a subtraction of a defined deviation limit constant to the reference value:

$$
\begin{aligned}
&\text{HighDevLimit} = \text{GenBeTm} + \text{const};\\
&\text{LowDevLimit} = \text{GenBeTm} - \text{const}
\end{aligned}
\qquad (8)
$$

In the equations above HighDevLimit stands for the high, LowDevLimit stands for the low deviation limit.

In the next, the limit prove step 28, it is proved whether or not the measured generator bearing temperature is outside the deviation limit area. If the generator bearing temperature is outside, this may indicate that something is going wrong with the wind turbine. Then the fifth step, the alarm step 29, is executed, i.e. an alarm is triggered. Afterwards the operational phase continues with the sampling step 25, i.e. new measurement values are sampled. If the generator bearing temperature is inside the deviation limit area, the process returns directly to the first step 25 and again new measurement values are sampled.

Figure 4 shows in a curve diagram the principal of operation of the method depicted in figure 2. The curve diagram comprises four curves 30, 31, 32, 33 that represent the generator bearing temperature GenBeTm, the correlating reference values 31 and deviation limits 32, 33 over time t. The topmost, dashed curve displays a high deviation limit 32 as defined according to the method described in figure 2. The dotted curve below displays current measurement values of the generator bearing temperature 30, as measured according to the method described in figure 2. The solid-lined curve displays the correlating reference values 31 determined by the dynamic linear model defined in equation (7), which are calculated according to the method described in figure 2. The bottommost, dot-dashed curve displays the low deviation limit 33 as defined according to the method described in figure 2.

Analogous to the situation depicted in figure 1 at the time when lubrication is done 35, this results in a very high value peak 36 of the generator bearing temperature 30 because of a problem in the wind turbine. But this time the generator bearing temperature curve 30 cuts the high deviation limit curve 32, i.e. it exceeds the correlating value 34 of the high deviation limit 32, thus leaving the deviation limit area. And this time according to the method described in figure 2 an alarm would be triggered. That is because the deviation limits 32, 33 closely follow the reference values 31 given by the dynamic linear model according to mathematical term (7), which in turn represents the generator bearing temperature 30 which - according to this example - is relevant for the status of a well functioning wind turbine. This may result in fewer false and more correct alarms.

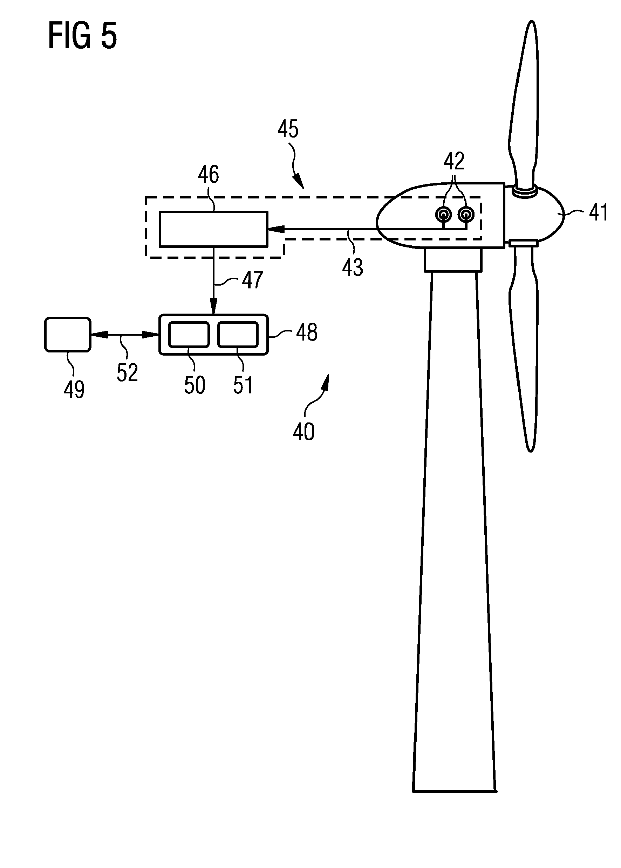

Figure 5 shows a schematic perspective of a wind turbine 41 and a monitoring apparatus 40 according to an embodiment of the invention. The depicted monitoring apparatus 40 implements an embodiment of the method described in the figures 2 and 3. It comprises a capturing system 45, an analysing system 48 and an output interface 49. In this embodiment the capturing system 45 is designed to capture measurement values of a single wind turbine 41 according to the method described in figure 2. It consists of sensors 42 and an accumulation system 46. Thereby adequate sensors 42 for capturing the respective physical quantities are used, e.g. temperature sensors and revolution counters. And the sensors 42 are placed suitably at the wind turbine 41 or the ambiance respectively for measuring the generator bearing temperature, the produced power, the generator revolutions and the ambient temperature. The accumulation system 46 is designed to process data delivered by the sensors 42 and to convert them into measurement values appropriate for further processing by the analysing system 48. In this embodiment the accumulation system 46 is implemented as a single stand-alone system. Sensors 42 and accumulation system 46 are implemented spatially divided and therefore are linked together by an appropriate transmission system 43, comprising wired, e.g. cables, or wireless transmission channels.

The analysing system 48 is connected to the accumulation system 46 wireless or via a data cable 47 for the transfer of digital measurement value data. It comprises a model interface 51 for creating or retrieving linear models.

The model interface in the example shown in figure 5 is a storage system, which is used to store linear model data and to buffer data for later usage, e.g. measurement values. But it can be any interface to get the linear model or a program for generating the linear model. The analysing system 48 further comprises a respective processing logic 50 for processing the second to fifth step of the operational phase 24 depicted in figure 2 and also the model adjustment according to the method described in figure 2. The analysing system 48 is implemented by specific integrated circuits (ASIC).

The monitoring apparatus 40 further comprises an output interface 49, which is connected to the analysing system 48 by a respective data cable 52 for transferring status information of the wind turbine 41 to the output interface 49 and user input data to the analysing system 48. The output interface 49 is implemented as GUI to display the status information and the alarms in particular which are generated by the analysing system 48 as described above. It also serves for modifying or substituting the linear model. Thereby the GUI accepts input via a keyboard and mouse and provides articulated graphical output on the computer monitor.

Although the present invention has been disclosed in the form of preferred embodiments and variations thereon, it will be understood that numerous additional modifications and variations could be made thereto without departing from the scope of the invention. Besides the mentioned least square method other methods can be deployed to estimate the best fit for the linear coefficients. What is "the best fit" depends on the situation and the applied linear model. There are known mathematical standard methods, in particular 'curve fitting' methods. Thereby each known method provides assets and drawbacks. Which of the methods is the best depends on the individual situation and may therefore be decided as the case arises.

For the sake of clarity, it is to be understood that the use of "a" or "an" throughout this application does not exclude a plurality, and "comprising" does not exclude other steps or elements. A "unit" or "module" can comprise a number of units or modules, unless otherwise stated.

### Claims

1. A method for automated surveillance of at least one wind turbine (41), comprising the following process steps (21, 23, 18, 25 26, 27, 28, 29):

   - creating or retrieving at least one linear model (21, 23, 18) which represents at least one status parameter of the wind turbine (41) and which comprises a plurality of linear coefficients and at least one measurement variable, whereby the values of the linear coefficients are determined based on test measurement values (MVt) for the measurement variable and the status parameter of the wind turbine (41);
   - repeatedly capturing (25) momentary measurement values (30) for the measurement variables and the status parameter of the wind turbine (41);
   - determining (26) at least one momentary reference value of the status parameter based on the momentary measurement values for the measurement variables by using the linear model; and
   - generating (29) wind turbine status information based on the deviation of the momentary measurement value from the corresponding momentary reference value of the status parameter.

2. A method for monitoring a wind turbine (41) according to claim 1, wherein at least a momentary deviation limit (32, 33) is determined based on the momentary reference value (31) and the status information is generated (29) based on whether the momentary measurement value (30) for the status parameter exceeds the momentary deviation limit (32, 33).

3. A method for monitoring a wind turbine (41) according to claim 1 or 2, wherein at least one linear model is a linear normal model.

4. A method for monitoring a wind turbine (41) according to any of claims 1 to 3, wherein at least one linear model is a dynamic linear model.

5. A method for monitoring a wind turbine (41) according to any of claims 1 to 4, wherein at least one linear model is supplemented with one or more filter steps for filtering problematic measurement values.

6. A method for monitoring a wind turbine (41) according to any of claims 1 to 5, wherein captured measurement values within a defined period are down-sampled.

7. A method for monitoring a wind turbine (41) according to any of claims 1 to 6, wherein linear coefficients are determined by means of a "least squares" method.

8. A method for monitoring a wind turbine (41) according to any of claims 1 to 7, wherein linear coefficients are determined by means of a "robust fit" method.

9. A method for monitoring a wind turbine (41) according to any of claims 1 to 8, wherein the momentary deviation limit (32, 33) is derived from model residuals.

10. A method for monitoring a wind turbine (41) according to claim 9, wherein the momentary deviation limit (32, 33) is derived from a standard deviation of the model residuals.

11. A method for creating a linear model for use in a method for monitoring a wind turbine (41) according to any of claims 1 to 10, which method comprises

- a modelling phase (20), in which the linear model is built (21) such that it represents at least one status parameter of the wind turbine (41) and comprises a plurality of linear coefficients and at least one measurement variable
- a model adjustment phase (22), in which a plurality of test measurement values for the measurement variables and the status parameter of the wind turbine (41) are captured or retrieved and the values of the linear coefficients are determined using the test measurement values.

12. A monitoring apparatus (40) for automated surveillance of a wind turbine (41) which implements the methods of any of claims 1 to 9, comprising

- a model interface (51) for creating or retrieving at least one linear model which represents at least one status parameter of the wind turbine (41) and which comprises a plurality of linear coefficients and at least one measurement variable, whereby the values of the linear coefficients are determined based on test measurement values (MVt) for the measurement variable and the status parameter of the wind turbine (41);
- a capturing system (45) for repeatedly capturing momentary measurement values (30) for the measurement variables and the status parameter of the wind turbine (41);
- an analysing system (48), for determining at least one momentary reference value (31) of the status parameter based on the momentary measurement values (30) for the measurement variables using the linear model, and for generating wind turbine status information (29) based on the deviation of the momentary measurement value from the corresponding momentary reference values (31) of the status parameter,
- comprising at least one interface (49) which outputs the wind turbine status information.

FIG 1

# FIG 2

FIG 3

FIG 4

# FIG 5

Europäisches
Patentamt

European
Patent Office

Office européen
des brevets

# EUROPEAN SEARCH REPORT

Application Number

EP 11 15 1130

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/138267 A1 (VITTAL SAMEER [US] ET AL) 3 June 2010 (2010-06-03) | 1-4,8-12 | INV. F03D7/04 |
| Y | * paragraph [0017] - paragraph [0036]; claims 1-20; figures 2-6 * | 5-7,9 | |
| X | WO 2009/076955 A1 (VESTAS WIND SYS AS [DK]; POULSEN BOERGE [DK]; RIMMEN PETER DE PLACE [D) 25 June 2009 (2009-06-25) | 1,2,12 | |
| Y | * page 4, lines 22-29 * <br> * page 7, lines 5-26 * <br> * page 11, line 26 - page 12, line 9 * <br> * page 16, lines 4-12; figures 4-6 * | 3-11 | |
| X | US 2006/113801 A1 (SCHUBERT THOMAS [DE] ET AL) 1 June 2006 (2006-06-01) | 1,2,12 | |
| Y | * paragraph [0020] - paragraph [0027]; claims 1-9; figures 1-4 * | 3-11 | |
| X | EP 1 930 855 A2 (GEN ELECTRIC [US]) 11 June 2008 (2008-06-11) | 1,2,12 | TECHNICAL FIELDS SEARCHED (IPC) |
| Y | * paragraph [0009] - paragraph [0020]; claims 1-10; figures 1-4 * | 3-11 | F03D G05B G07C |

The present search report has been drawn up for all claims

| Place of search | Date of completion of the search | Examiner |
|---|---|---|
| Munich | 30 May 2011 | Balice, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 476 901 A1

## ANNEX TO THE EUROPEAN SEARCH REPORT
## ON EUROPEAN PATENT APPLICATION NO.

EP 11 15 1130

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2011

| Patent document cited in search report | | Publication date | Patent family member(s) | | Publication date |
|---|---|---|---|---|---|
| US 2010138267 | A1 | 03-06-2010 | CN 102022264 A<br>EP 2290597 A2 | | 20-04-2011<br>02-03-2011 |
| WO 2009076955 | A1 | 25-06-2009 | EP 2232697 A1<br>US 2010270798 A1 | | 29-09-2010<br>28-10-2010 |
| US 2006113801 | A1 | 01-06-2006 | DE 102004056223 A1<br>EP 1659287 A2 | | 18-05-2006<br>24-05-2006 |
| EP 1930855 | A2 | 11-06-2008 | CA 2612039 A1<br>CN 101196432 A<br>US 2008140349 A1 | | 08-06-2008<br>11-06-2008<br>12-06-2008 |

EPO FORM P0459

For more details about this annex : see Official Journal of the European Patent Office, No. 12/82

17